Europäisches Patentamt

European Patent Office

Office européen des brevets

(11) Veröffentlichungsnummer: **0 094 066**
**B1**

(12) **EUROPÄISCHE PATENTSCHRIFT**

(45) Veröffentlichungstag der Patentschrift:
18.03.87

(51) Int. Cl.⁴: **H 01 H 13/14,** F 16 H 21/04

(21) Anmeldenummer: **83104502.6**

(22) Anmeldetag: **06.05.83**

(54) **Betätigungsvorrichtung für Schalteinrichtungen.**

(30) Priorität: **07.05.82 DE 3217138**

(43) Veröffentlichungstag der Anmeldung:
**16.11.83 Patentblatt 83/46**

(45) Bekanntmachung des Hinweises auf die Patenterteilung:
**18.03.87 Patentblatt 87/12**

(84) Benannte Vertragsstaaten:
**AT BE CH FR GB IT LI LU NL SE**

(56) Entgegenhaltungen:
**DE-A-2 756 835**
**DE-A-3 014 996**
**FR-A-1 116 937**
**US-A-3 582 594**
**US-A-4 359 612**

(73) Patentinhaber: **Burkart, Eberhard, Mindelweg 2
Ortsteil Hausen, D-8949 Salgen (DE)**

(72) Erfinder: **Burkart, Eberhard, Mindelweg 2 Ortsteil
Hausen, D-8949 Salgen (DE)**

(74) Vertreter: **Dorner, Jörg, Dr.- Ing., Dorner &
Hufnagel Patentanwälte Ortnitstrasse 20, D-8000
München 81 (DE)**

## Beschreibung

Die Erfindung betrifft eine Betätigungsvorrichtung für Schalteinrichtungen mit einem Träger, ferner mit mindestens einem relativ zum Träger beweglichen, auf die Schalteinrichtung wirkenden Tastenelement, mit einer Parallelführung zwischen dem Träger und mit einer federnden Rückstelleinrichtung für das Tastenelement.

Betätigungsvorrichtungen dieser Art sind in Gestalt von Klingeleinrichtungen für Haushaltinstallationen bekannt und besitzen ein Tastenelement in Form eines Druckknopfes, der in einem Träger geführt ist. Der Druckknopf ist dabei beispielsweise zylindrisch gestaltet und die Führung von einer entsprechenden Ausnehmung im Träger gebildet.

Bei nicht ausreichend langer Führung besteht die Gefahr, daß sich der Druckknopf in seiner Führung verkantet und in seiner Beweglichkeit behindert wird. Aber auch dann, wenn die Beweglichkeit sichergestellt ist, kann sich durch die Verkantung ein nachteiliger Einfluß des Druckknopfes auf die Schalteinrichtung ergeben. Es ist unsicher, ob die Schalteinrichtung tatsächlich betätigt wird.

Ähnliche Probleme wie bei Klingeleinrichtungen treten bei parallel geführten Betätigungsplatten bzw. Tastenelementen für Schalteinrichtungen für beliebige Zwecke auf. Es können dies elektrische Installationen in Gebäuden sein, aber auch Betätigungseinrichtungen von elektrischen oder elektronischen Geräten, beispielsweise Recheneinrichtungen, Schreibmaschinen oder dergleichen.

Eine zuverlässige Parallelführung kann dann erhalten werden, wenn ausreichend lange, stiftartige Elemente vorgesehen werden, die in entsprechende Ausnehmungen eintauchen. Dabei ist es regelmäßig erwünscht, daß auch Verdrehsicherungen vorgesehen werden, beispielsweise dadurch, daß mehrere Stifte benutzt werden oder die Stifte und die zugehörigen Ausnehmungen eine von der Kreisform abweichende Gestalt besitzen. Die Notwendigkeit ausreichend langer Führungen vergrößert jeweils die Bauhöhe und damit den Herstellungsaufwand.

In aller Regel sind die Betätigungsvorrichtungen der in Rede stehenden Art mit federnden Rückstelleinrichtungen für das Tastenelement versehen, um das Tastenelement nach der Betätigung wieder in die Ausgangslage zurückzuführen.

Im allgemeinen werden hierbei Schraubenfedern verwendet, denen Halte- und Führungseinrichtungen zuzuordnen sind.

Die bekannten Parallelführungen arbeiten häufig nicht zuverlässig und werden daher oft durch Einrichtungen ersetzt, die eine Gelenkachse aufweisen, um die das Tastenelement im wesentlichen verschwenkbar ist. Diese Gelenkachse muß jedoch ausreichend weit seitlich des Tastenelementes angeordnet sein, um die Beweglichkeit des Tastenelementes nicht zu behindern. Auch dies erhöht den Aufwand und den Platzbedarf.

Durch die De-A- 25 37 628 und DE-A- 30 14 996 sowie die US-A- 3 932 722 sind Betätigungsvorrichtungen für Schalteinrichtungen bekannt geworden, bei denen eine Halterung und Führung von Tastenelementen durch elastisch verformbare Laschen oder Wandabschnitte erreicht wird, die sich zwischen einem Tastenelement und einem Träger erstrecken. Aufgrund einer jeweils unterschiedlichen Verformung dieser Laschen oder Wandabschnitte auf verschiedenen Seiten des Tastenelementes je nach Angriff einer Betätigungskraft an dem Tastenelement wird eine präzise Parallelführung bei den bekannten Betätigungsvorrichtungen nicht erreicht.

Aus der GB-A- 999 010 und der SE-A- 141 907 ist es bekannt, eine Plattform relativ zu einer Basis durch zwei im Winkel zueinander stehende Gelenklaschenanordnungen parallel zu führen. Bisher hat man offenbar nicht erkannt, daß eine solche Parallelführung bei Betätigungsvorrichtungen für Schalteinrichtungen als Ersatz für Schiebe-Parallelführungen eingesetzt werden könnte.

Es ist Aufgabe der Erfindung, eine Betätigungsvorrichtung für Schalteinrichtungen der eingangs erwähnten Art zu schaffen, die bei geringem Herstellungsaufwand und Platzbedarf, insbesondere bezüglich der Baudhöhe, eine einwandfrei funktionierende exakte Parallelführung für das Tastenelement besitzt, so daß die Sicherheit der Betätigung der Schalteinrichtung nicht durch Mängel der Parallelführung beeinträchtigt wird.

Diese Aufgabe wird erfindungsgemäß dadurch gelöst, daß die Parallelführung aus einer an sich bekannten Scharniergelenkführung mit mindestens zwei im Winkel zueinander angeordneten Gelenklaschenanordnungen besteht, wobei jede Gelenklaschenanordnung mit je einem Endstück einerseits mit dem Träger und andererseits mit dem Tastenelement verbunden ist, und daß zwei Gelenklaschen zwischen den Endstücken mit zueinander parallelen Scharniergelenken untereinander und mit den Endstücken verbunden sind. Vorzugsweise sind die Scharniergelenke und die Gelenklaschen einstückig aus Kunststoff geformt, wobei die Scharniergelenke durch im Vergleich zu den steiferen Gelenklaschen kleinere Wandstärken geschaffen sind.

Durch die Erfindung wird in überraschend einfacher Weise die vorgenannte Aufgabe gelöst. Durch zwei sinnvoll orientierte Gelenklaschenanordnungen, die je aus einem Kunststofformteil bestehen, wird eine exakte Parallelführung des Tastenelementes erhalten. Das Kunststofformteil kann dabei gleichzeitig auch die elastisch federnde Rückstelleinrichtung für das Tastenelement bilden, so daß in vielen Fällen eine zusätzliche Feder oder dergleichen entbehrlich ist.

Eine einzelne Gelenklaschenanordnung mit zwei gelenkig am Träger und an dem Tastenelement angeschlossenen Gelenklaschen würde an sich noch keine Parallelführung ergeben, weil eine solche Gelenklaschenanordnung dem Tastenelement eine völlige Beweglichkeit in der Ebene senkrecht zu den Gelenken ließe. Lediglich eine Verschiebung parallel zu den Gelenken wäre ausgeschlossen. Wenn aber zwei Gelenklaschenanordnungen winklig, beispielsweise im rechten Winkel zueinander anordnet werden, ergeben beide Gelenklaschenanordnungen zusammen eine exakte Parallelführung.

Günstig ist bei der Erfindung, daß eine gleitende Reibung zwischen zwei Teilen vermieden ist. Es tritt nur eine Reibung im Bereich der Scharniere auf, die jedoch gering ist.

Von wesentlichem Vorteil ist die bei der Erfindung mögliche geringe Bautiefe. Es ist leicht möglich, die Abmessungen so gering zu halten, daß sie nur einem Teil des Verschiebungsweges des Tastenelementes entsprechen.

Außermittige Belastungen des Tastenelementes führen in keinem Falle zu einer solchen Verkantung, daß dadurch die Beweglichkeit beeinträchtigt wäre.

In weiterer Ausbildung der Erfindung ist vorgesehen, daß das einstückige Kunststofformteil auch die Endstücke umfaßt. Bei einer solchen Ausbildung stellt jede Gelenklaschenanordnung ein Bauelement dar, das dann zwischen dem Träger und dem Tastenelement anzuordnen ist.

Die Erfindung kann aber auch dadurch verwirklicht werden, daß das einstückige Kunststofformteil auch das Tastenelement und/oder den Träger umfaßt, d.h., die wesentlichen Elemente der Betätigungsvorrichtung können einstückig ausgestaltet sein, so daß besondere Montagemaßnahmen entbehrlich werden.

Bei einer anderen Variante der Erfindung ist es günstig, wenn das einstückige Kunststofformteil mehrere Gelenklaschenanordnungen umfaßt.

Die Erfindung schlägt vor, daß die Gelenklaschenanordnungen nach Art eines regelmäßigen Vieleckes angeordnet sind und wesentliche Teile der Schalteinrichtung umgeben. So können zum Beispiel drei oder vier Gelenklaschenanordnungen nach Art eines gleichschenkligen Dreieckes bzw. eines Quadrates vorgesehen sein.

Bei einer bewährten Ausbildungsform der Erfindung weist eine der Gelenklaschen im Querschnitt eine rechteckige Gestalt auf und an einer Ecke des Rechtecks ist ein Scharnier angesetzt.

Die gegenseitige Stellung der Gelenklaschen untereinander bzw. der Gelenklaschen zu den Endstücken kann an sich bei der Erfindung frei gewählt werden, wobei die jeweiligen Platzverhältnisse berücksichtigt werden können.

Günstige Ergebnisse werden jedoch dann erhalten, wenn in einer Endstellung, insbesondere bei nicht betätigtem Tastenelement, die beiden Gelenklaschen im wesentlichen rechtwinklig zueinander und eine Gelenklasche parallel zur Bewegungsrichtung des Tastenelementes ausgerichtet sind. Dabei bleibt die Beanspruchung der Scharniere verhältnismäßig gering und auch die Rückstellkraft ist verhältnismäßig gleichförmig, was den Vorteil hat, daß bei der Betätigung des Tastenelementes auch die Betätigung der zugehörigen Schalteinrichtung immer sichergestellt ist.

Wie schon oben erwähnt, besitzt die erfindungsgemäße Betätigungsvorrichtung wegen der Elastizität in den Scharnieren eine gewisse Rückstellkraft, die für manche Fälle ausreicht. Ist eine stärkere, elastische Rückstellkraft erwünscht, dann kann, wie die Erfindung weiter vorsieht, sich zwischen den beiden Endstücken eine Federlasche erstrecken, die sich bei der Relativbewegung der beiden Endstücke elastisch verformt. Diese Federlasche, die sich beispielsweise über den Bereich von zwei Gelenklaschen erstreckt, wird bei der Bewegung der Betätigungsvorrichtung verbogen, wodurch die elastischen Rückstellkräfte entstehen, die die Endstücke wieder in die Ausgangslage zürückbringen.

Es empfiehlt sich, die Federlasche durch zwei Scharniere an die Endstücke anzuschließen, wobei sich die Scharniere der Federlasche koaxial zu den Scharnieren erstrecken, mit denen die Gelenklaschen an den Endstücken angeschlossen sind.

Die Federlasche ist insbesondere einstückig mit den übrigen Teilen der jeweiligen Gelenklaschenordnung verbunden. Durch entsprechende Veränderung der Stärke der Federlasche ist es leicht möglich, die Rückstellkraft den jeweiligen Gegebenheiten anzupassen.

In der Zeichnung sind einige Ausführungsbeispiele der Erfindung schematisch dargestellt. Es zeigt

Fig. 1 einen senkrechten Schnitt durch eine Betätigungsvorrichtung gemäß der Erfindung im unbetätigten Zustand,

Fig. 2 die Betätigungsvorrichtung nach der Fig. 1 im betätigten Zustand,

Fig. 3 einen Schnitt durch die Darstellung der Fig. 1 entsprechend der Schnittlinie III-III, in einem anderen Maßstab,

Fig. 4 eine der Darstellung der Fig. 3 entsprechende Darstellung eines Teils einer abgewandelten Ausführungsform der Erfindung,

Fig. 5 eine Darstellung einer anderen erfindungsgemäßen Variante,

Fig. 6 eine perspektivische Darstellung einer Gelenklaschenanordnung und

Fig. 7 und 8 eine perspektivische Darstellung eines abgewandelten Ausführungsbeispiels einer Gelenklaschenanordnung in zwei Betriebsstellungen.

Bei den in der Zeichnung dargestellten Ausführungsformen der Erfindung ist davon ausgegangen, daß die Betätigungsvorrichtung gemäß der Erfindung für eine Schalteinrichtung, beispielsweise bei einer Hausinstallation, benutzt wird. Dabei wirkt das Tastenelement 5 beispielsweise über einen Stift 13 auf eine Schalteinrichtung 12. Diese Schalteinrichtung 12 ist, wie an sich bekannt, in einer Ausnehmung 14 einer Schaltdose 15 angeordnet, die beispielsweise in eine Wand 16 eingelassen ist. Das Tastenelement 5 kann mit dem Stift 13 verbunden sein, der Stift 13 kann aber auch nur am Tastenelement anliegen. Das Tastenelement 5 und der Träger 4 decken die Ausnehmung 14 ab. Die zugehörigen Befestigungselemente für den Träger 4, der mit seinem Flansch 19 in die Ausnehmung 14 eingreift, sind nicht näher dargestellt.

Die Erfindung kann aber nicht nur bei Hausinstallationen, also beispielsweise bei Klingelknöpfen oder anderen Schaltern oder dergleichen angewandt werden. Die grundsätzlich gleiche Bauweise ist auch bei Schalteinrichtungen für andere elektrische oder elektronische Geräte anwendbar. Bei Betätigungsvorrichtungen, bei denen ein Träger eine Vielzahl von Tastenelementen trägt, wie zum Beispiel bei Rechengeräten, elektronischen Schreibmaschinen oder dergleichen, sind die Außenabmessungen bei gleichem Grundaufbau sinngemäß anzupassen. Die einfache Ausgestaltung der erfindungsgemäßen Betätigungsvorrichtung erleichtert dabei wesentlich auch die Herstellung in kleinen Abmessungen.

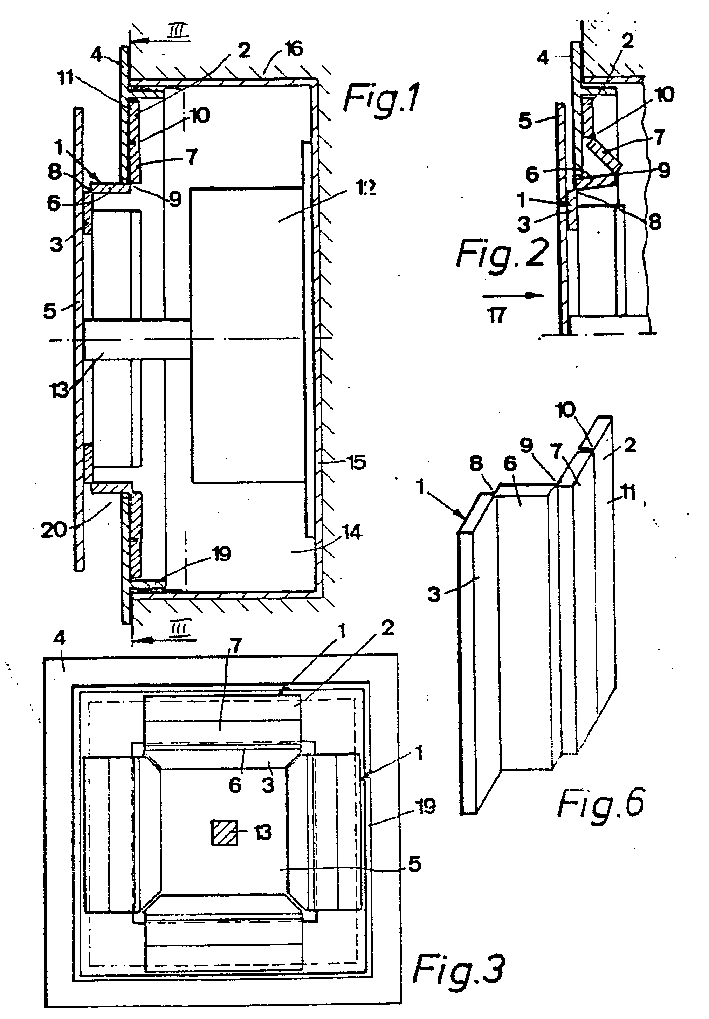

Bei dem Ausführungsbeispiel nach den Fig. 1 bis 3 sind zwischen dem Tastenelement 5 und dem Träger 4 insgesamt vier Gelenklaschenanordnungen 1 vorgesehen. Die Anordnung erfolgt dabei im Sinne eines Quadrates. Die Erfindung kann aber auch verwirklicht werden, wenn nur zwei im Winkel zueinander angeordnete Gelenklaschenanordnungen vorgesehen werden. Ein Winkel von 90° ist günstig, aber nicht notwendig.

Jede Gelenklaschenanordnung 1 besteht im wesentlichen aus den beiden Endstücken 2 und 3 und den Gelenklaschen 6 und 7. Das Endstück 3 ist dabei am Tastenelement 5 befestigt und das Endstück 2 am Träger 4. Die Befestigung bzw. Verbindung zwischen den Endstücken und dem Tastenelement 5 bzw. dem Träger 4 kann dabei durch Klebung oder durch andere bekannte Mittel erfolgen. Insbesondere können die Gelenklaschenanordnung 1 und das Tastenelement 5 bzw. der Träger 4 auch einstückig gestaltet sein.

Zwischen den Endstücken 2 bzw. 3 und den Gelenklaschen 6 und 7 sind jeweils Scharniere 8, 9 und 10 vorgesehen. Diese Scharniere werden durch entsprechende geringe Wandstärken des Kunststoffmaterials geschaffen, das die Gelenklaschenanordnungen bildet. Die einzelnen Gelenklaschen 6 bzw. 7 sind im Querschnitt rechteckig gestaltet und die Scharniere 8, 9 und 10 sind jeweils in einer Ecke dieses Rechtecks angeordnet. Auf diese Weise wird eine sichere Beweglichkeit bei ausreichender Steifheit der Gelenklaschen erhalten. Das Kunststofformteil, das die Gelenklaschenanordnungen bildet, ist mit 11 bezeichnet.

Fig. 1 zeigt eine Ruhestellung bei unbetätigtem Tastenelement 5. Die Gelenklasche 6 erstreckt sich dabei im wesentlichen in der Bewegungsrichtung des Tastenelementes, die sich ergibt, wenn, wie Fig. 2 zeigt, das Tastenelement in Richtung des Pfeiles 17 zurückgedrückt wird. Bei dieser Bewegung wird im wesentlichen die Gelenklasche 7 um das Scharnier 10 verschwenkt. Aber auch das Scharnier 9 wird beansprucht. Da diese Scharniere durch entsprechend dünnwandiges Kunststoffmaterial gebildet werden, ergibt sich ein federnder Rückstelleffekt. Das Scharnier 8 ist vergleichsweise wenig beansprucht. Bei der Betätigung des Tastenelementes 5 betätigt der Stift 13 die Schalteinrichtung 12.

Ohne Betätigung kehrt das Tastenelement 5 wieder in die Stellung der Fig. 1 zurück.

Zu erwähnen ist ferner, daß die Gelenklaschenanordnungen 1 auch weitgehend den Spalt 20 zwischen dem Tastenelement 5 und dem Träger 4 verschließen.

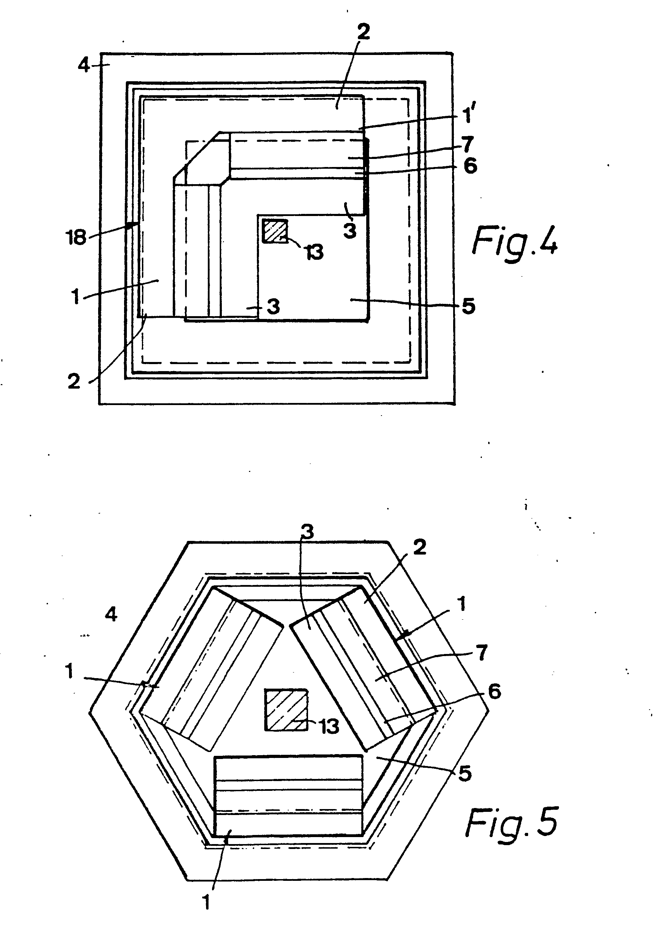

Bei dem Ausführungsbeispiel nach den Fig. 1 bis 3 sind die Gelenklaschenanordnungen 1 als Einzelelemente gestaltet. Im Rahmen der Erfindung ist es aber auch möglich, wie beispielsweise Fig. 4 zeigt, zwei Gelenklaschenanordnungen 1 und 1', die winklig zueinander angeordnet sind, zu einem gemeinsamen Formteil 18 zusammenzufügen. Ein derartiges Formteil 18 ist voll funktionsfähig. Es können aber auch mehrere Formteile 18 in einer Betätigungsvorrichtung vorgesehen werden.

Das Ausführungsbeispiel nach der Fig. 5 zeigt eine Variante, bei der drei Gelenklaschenanordnungen 1 dreieckförmig einander zugeordnet sind und beispielsweise ein sechseckiges Tastenelement führen.

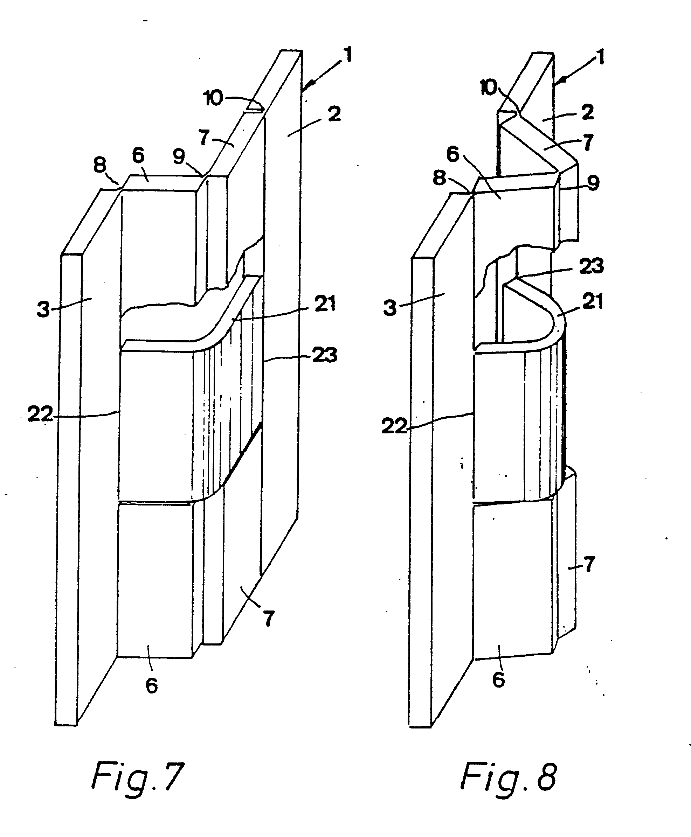

In den Fig. 7 und 8 ist ein abgewandeltes Ausführungsbeispiel einer Gelenklaschenanordnung 1 dargestellt. Bei diesem Ausführungsbeispiel sind die Gelenklaschen 6 und 7 unterteilt und zwischen den Teilen dieser Gelenklaschen 6 und 7 ist eine Federlasche 21 vorgesehen. Diese ist mittels des Scharnieres 22 an das Endstück 3 und mittels des Scharnieres 23 an das Endstück 2 angeschlossen. Die Scharniere 22 und 23 verlaufen koaxial zu den Scharnieren 8 und 10. Bei der Relativbewegung der Endstücke 2 und 3 ergibt sich eine Verbiegung der Federlasche 21, wodurch die gewünschte federnde Rückstellkraft auftritt. Im gezeigten Ausführungsbeispiel ist die Stärke der Federlasche 21 geringfügig kleiner gehalten als die Stärke der anderen Laschen der Gelenklaschenanordnung 1. Durch eine Veränderung der Stärke der Federlasche kann

somit leicht die Federkraft beeinflußt werden, entsprechendes gilt natürlich für die Breitenausdehnung der Federlasche in Richtung der Scharniere.

Beim gezeigten Ausführungsbeispiel ist die Federlasche 21 zwischen die unterteilten Gelenklaschen 6 und 7 eingefügt. Dies ist nur als Anwendungsbeispiel zu verstehen. Die Federlasche 21 kann auch, wenn gewünscht, an einem Ende eines Gelenklaschenelementes vorgesehen werden.

**Patentansprüche**

1. Betätigungsvorrichtung für Schalteinrichtungen mit einem Träger (4), ferner mit mindestens einem relativ zum Träger (4) beweglichen, auf die Schalteinrichtung (12) wirkenden Tastenelement (5), mit einer Parallelführung (2, 3, 6, 7, 8, 9, 10) zwischen dem Träger (4) und dem Tastenelement (5) und mit einer federnden Rückstelleinrichtung für das Tastenelement (5), dadurch gekennzeichnet, daß die Parallelführung aus einer an sich bekannten Scharniergelenkführung mit mindestens zwei im Winkel zueinander angeordneten Gelenklaschenanordnungen (1) besteht, wobei jede Gelenklaschenanordnung mit je einem Endstück (2, 3) einerseits mit dem Träger (4) und andererseits mit dem Tastenelement (5) verbunden ist, und daß zwei Gelenklaschen (6, 7) zwischen den Endstücken (2, 3) mit zueinander parallelen Scharniergelenken (8, 9, 10) untereinander und mit den Endstücken verbunden sind.

2. Betätigungsvorrichtung nach Anspruch 1, dadurch gekennzeichnet, daß die Scharniergelenke (8, 9, 10) und die Gelenklaschen (6, 7) einstückig aus Kunststoff geformt sind, wobei die Scharniergelenke durch im Vergleich zu den steiferen Gelenklaschen kleinere Wandstärke geschaffen sind.

3. Betätigungsvorrichtung nach Anspruch 2, dadurch gekennzeichnet, daß das einstückige Kunststofformteil (11) auch die Endstücke (2, 3) umfaßt.

4. Betätigungsvorrichtung nach Anspruch 2 oder 3, dadurch gekennzeichnet, daß das einstückige Kunststofformteil (11) auch das Tastenelement (5) und/oder den Träger (4) umfaßt.

5. Betätigungsvorrichtung nach einem der Ansprüche 2 bis 4, dadurch gekennzeichnet, daß das einstückige Kunststofformteil (18) mehrere Gelenklaschenanordnungen (1) umfaßt.

6. Betätigungsvorrichtung nach einem der Ansprüche 1 bis 5, dadurch gekennzeichnet, daß die Gelenklaschenanordnungen (1) nach Art eines regelmäßigen Vielecks angeordnet sind und wesentliche Teile der Schalteinrichtung (12) umgeben.

7. Betätigungsvorrichtung nach einem der Ansprüche 1 bis 6, dadurch gekennzeichnet, daß eine der Gelenklaschen (6, 7) im Querschnitt eine rechteckige Gestalt aufweist und an einem Eck des Rechtecks ein Scharnier (8, 9, 10) angesetzt ist.

8. Betätigungsvorrichtung nach einem der Ansprüche 1 bis 7, dadurch gekennzeichnet, daß in einer Endstellung, insbesondere bei nichtbetätigtem Tastenelement (5), die beiden Gelenklaschen (6, 7) im wesentlichen rechtwinklig zueinander und eine Gelenklasche (6) parallel zur Bewegungsrichtung des Tastenelementes (5) ausgerichtet sind.

9. Betätigungsvorrichtung nach einem der Ansprüche 1 bis 8, dadurch gekennzeichnet, daß sich zwischen den beiden Endstücken (2, 3) eine Federlasche (21) erstreckt, die sich bei der Relativbewegung der beiden Endstücke elastisch verfomt.

10. Betätigungsvorrichtung nach Anspruch 9, dadurch gekennzeichnet, daß die Federlasche (21) durch Scharniere (22, 23) mit den Endstücken (2, 3) verbunden ist und daß die Scharniere (22, 23) koaxial zu den Scharnieren (8, 10) ausgerichtet sind, mit denen die Gelenklaschen (6, 7) an den Endstücken angelenkt sind.

11. Betätigungsvorrichtung nach Anspruch 9, dadurch gekennzeichnet, daß die Stärke der einstückig mit den Gelenklaschenanordnungen (1) ausgebildeten Federlasche (21) verschieden ist von der Stärke der Gelenklaschen (6, 7) und der Endstücke (2, 3).

**Claims**

1. Actuation device for switching facilities with a support (4), furthermore with at least one button element (5) which is movable relative to the support (4) and acts on the switching facility (12), with a parallel guide (2, 3, 6, 7, 8, 9, 10) between the support (4) and the button element (5) and with a resilient restoring facility for the button element (5), characterized in that the parallel guide consists of a hinge-joint guide, known per se, with at least two joint plate arrangements (1) arranged at an angle to each other, each joint plate arrangement being connected by in each case one end piece (2, 3) on the one hand to the support (4) and on the other hand to the button element (5), and in that two joint plates (6, 7) are connected between the end pieces (2, 3) to mutually parallel hinge joints (8, 9, 10) and to the end pieces.

2. Actuation device according to claim 1, characterized in that the hinge joints (8, 9, 10) and the joint plates (6, 7) are moulded integrally from plastic, the hinge joints being created by a wall thickness which is smaller in comparison with the more rigid joint plates.

3. Actuation device according to claim 2, characterized in that the integral plastic moulding (11) also comprises the end pieces (2, 3).

4. Actuation device according to claim 2 or 3, characterized in that the integral plastic moulding (11) also comprises the button element (5) and/or the support (4).

5. Actuation device according to one of claims 2 to 4, characterized in that the integral plastic moulding (18) comprises several joint-plate arrangements (1).

6. Actuation device according to one of claims 1 to 5, characterized in that the joint-plate arrangements (1) are arranged in the manner of a regular polygon and surround essential parts of the switching facility (12).

7. Actuation device according to one of claims 1 to 6, characterized in that one of the joint plates (6, 7) has a rectangular shape in cross-section and a hinge (8, 9, 10) is fitted at one corner of the rectangle.

8. Actuation device according to one of claims 1 to 7, characterized in that, in an end position, in particular with non-actuated button element (5), the two joint plates (6, 7) are substantially aligned at right angles to each other and a joint plate (6) is aligned parallel to the direction of movement of the button element (5).

9. Actuation device according to one of claims 1 to 8, characterized in that between the two end pieces (2, 3) extends a spring plate (21) which elastically deforms upon the relative movement of the two end pieces.

10. Actuation device according to claim 9, characterized in that the spring plate (21) is connected by hinges (22, 23) to the end pieces (2, 3), and in that the hinges (22, 23) are aligned coaxial to the hinges (8, 10), by which the joint plates (6, 7) are articulated on the end pieces.

11. Actuation device according to claim 9, characterized in that the thickness of the spring plate (21) designed integrally with the joint plate arrangements (1) is different from the thickness of the joint plates (6, 7) and the end pieces (2, 3).

**Revendications**

1. Dispositif de manœuvre pour dispositif de commutation avec un support (4), avec un élément de touche (5) pouvant se déplacer par rapport au support (4) et agissant sur le dispositif de commutation (12), avec un guidage - parallèle (2, 3, 6, 7, 8, 9, 10) entre le support (4) et l'élément de touche (5) et avec un dispositif de rappel élastique pour l'élément de touche (5), caractérisé en ce que le guidage parallèle est constitué d'un guidage à charnière articulée connu en soi avec, au moins, deux dispositifs à plaquettes articulées (1) disposées chacune suivant angle par rapport à l'autre, chaque dispositif à plaquettes articulées étant relié par l'une de ses extrémités (2, 3) d'une part au support (4) et, d'autre part, à l'élément de touche (5), et en ce que deux plaquettes articulées (6, 7) entre les pièces d'extrémité (2, 3) sont reliées aux pièces d'extrémité et l'une à l'autre au moyen de plaquettes articulées (8, 19), parallèles les unes aux autres.

2. Dispositif de manœuvre selon la revendication 1, caractérisé en ce que les articulations à charnière (8, 9, 10) et les plaquettes articulées (6, 7) sont formées en une pièce et sont réalisées en matière plastique, tandis que les charnières articulées présentent des épaisseurs de parois plus faibles que les plaquettes articulées plus rigides.

3. Dispositif de manœuvre selon la revendication 2, caractérisé en ce que la pièce moulée d'une pièce en matière plastique (11) comprend les pièces d'extrémité (2, 3).

4. Dispositif de manœuvre selon la revendication 2 ou 3, caractérisé en ce que la pièce moulée en matière plastique d'une pièce (11) comprend également l'élément de touche (5) et/ou le support (4).

5. Dispositif de manœuvre selon l'une des revendications 2 à 4, caractérisé en ce que la pièce moulée en matière plastique d'une pièce (18) comprend plusieurs dispositifs à plaquettes articulées (1).

6. Dispositif de manœuvre selon l'une des revendications 1 à 5, caractérisé en ce que les dispositifs à plaquettes articulées (1) sont disposés pour former un polygone régulier et entourent des parties importantes du dispositif de commutation (12).

7. Dispositif de manœuvre selon l'une des revendications 1 à 6, caractérisé en ce que l'une des plaquettes articulées (6, 7) présente une forme rectangulaire en coupe et qu'une charnière (8, 19) est disposée sur un angle du rectangle.

8. Dispositif de manœuvre selon l'une des revendications 1 à 7, caractérisé en ce que les deux plaquettes articulées (6, 7) sont disposées essentiellement perpendiculaires l'une à l'autre et qu'une plaquette articulée (6) est parallèle à la direction de déplacement de l'élément de touche (5) en une position extrême et, en particulier, lorsque l'élément de touche (5) n'est pas actionné.

9. Dispositif de manœuvre selon l'une des revendications 1 à 8, caractérisé en ce qu'une plaquette élastique (21) s'étend entre les deux pièces d'extrémité (2, 3) et se déforme élastiquement lors du déplacement relatif des deux pièces d'extrémité.

10. Dispositif de manœuvre selon la revendication 9, caractérisé en ce que la plaquette élastique (21) est reliée aux pièces d'extrémité (2, 3) par des charnières (22, 23) et en ce que les charnières (22, 23) sont disposées coaxialement par rapport aux charnières (8, 10) au moyen desquelles les plaquettes articulées (6, 7) sont articulées aux pièces d'extrémité.

11. Dispositif de manœuvre selon la revendication 9, caractérisé en ce que l'épaisseur de la plaquette élastique (21) réalisée d'une pièce avec les dispositifs à plaquettes articulées (1) est différente de l'épaisseur des plaquettes articulées (6, 7) et des pièces d'extrémités (2, 3).

0 094 066

Fig.1

Fig.2

Fig.3

Fig.6

1

*Fig.4*

*Fig.5*

Fig.7

Fig.8